Europäisches Patentamt

European Patent Office

Office européen des brevets

(11) Publication number: **0 016 637**

**A1**

(12)

# EUROPEAN PATENT APPLICATION

(21) Application number: **80300842.4**

(22) Date of filing: **19.03.80**

(51) Int. Cl.³: **G 06 F 3/04**
**H 04 L 5/14, H 01 P 5/00**

(30) Priority: **26.03.79 US 23795**
**26.03.79 US 23802**

(43) Date of publication of application:
**01.10.80 Bulletin 80/20**

(84) Designated Contracting States:
**DE FR GB NL**

(71) Applicant: **SPERRY CORPORATION**
**1290 Avenue of the Americas**
**New York, N.Y. 10019(US)**

(72) Inventor: **Davis, William Warren**
**16609 Galaxie Way**
**Rosemount, Minnesota 55068(US)**

(72) Inventor: **Griffith, Ernest Sharp**
**3936 Lynn Avenue South**
**St. Louis Park, Minnesota 55416(US)**

(74) Representative: **Michaels, Peter Albert**
**SPERRY UNIVAC Patent & Licensing Services M.S. S2**
**W1 SPERRY UNIVAC CENTRE**
**London NW10 8LS(GB)**

(54) Passive electric tap.

(57) A high impedance tap for use in distributed signal transmission systems, comprising microstrip circuit (100) which has conductor strips (101 and 103), located on an insulating substrate (102) and interconnecting the connectors (105). The substrate (102) also carries at least some of the high impedance components of the branch line.

The new tap design eliminates some of the random factors which, in prior art taps, led to unsatisfactory matching of those taps to the transmission line.

The specification also discloses a transceiver circuit for use with the tap and capable of receiving and transmitting low-level serial phase-modulated tri-state signals; and the configuration of a bus access module.

./...

Croydon Printing Company Ltd.

Fig. 2c

-1-

## Passive Electric Tap

The present invention relates to passive electric taps, and to transceiver circuits for use therewith.

In distributed systems such as, e.g., distributed data processing systems, it is generally desirable to have a minimum of point-to-point wiring compatible with optimum data communications and maximum flexibility, between an often large number of geographically and functionally distinct users. This may be achieved by a bus-like transmission line, the required numerous user connections to the signal transmission line being made via passive taps. However, as the number of users increases, and with it the number of taps, problems associated with loading and reflections on the transmission line arise which may affect the integrity of data and control information being transmitted and received over the transmission line.

Conventional passive taps comprise a short length of transmission cable, terminating at each end in an appropriate connector through which it can be connected in series with the signal transmission line, the branch conductors leading to the users being soldered to the conductors of the cable. By choosing a length of cable having impedance characteristics similar to those of the transmission line, a fair impedance match is usually possible. The matching does, however, depend on some factors which are not easily controlled in practice such as, inter alia, the amount of insulation stripped off, the relative positions of the bared conductors of the transmission cable and the branch line conductors, and the like.

The present invention provides a tap design which eliminates some of the random factors inherent in prior art taps and moreover, allows the impedance of the tap to be tailored to match that of the transmission line more closely, resulting in reduced reflections and loading. This is achieved by arranging for a substantially fixed spatial relationship between the conductors of the primary path, which is connected in series with the transmission line, and between the primary path and at least some high impedance components of the secondary path or branch connection.

In a practical embodiment, the tap may comprise a pair of connectors, compatible with the transmission line being used, and a microstrip circuit having an insulating substrate with suitably arranged conducting strips on both faces, and a plurality of plated-through holes. Selected high impedance components of the secondary path are mounted on the substrate to minimize interconnection distances; and the physical dimensions and the layout are chosen to match the impedance characteristics of the transmission line and to minimize the reflection-producing discontinuities. The minimization of reflections and loading at each tap is most critical, of course, when the signal level is relatively low and a maximum number of taps is required.

The performance of a tap is, to some extent, determined also by the nature of the circuitry connected to the tap, and the present invention therefore further provides a transceiver particularly suitable for the reception and transmission of phase modulated signals via a passive tap. The transceiver is connected to, and its input and output circuits form part of, the secondary signal path of the passive tap.

The transmitter portion of the transceiver conveniently comprises a coupling transformer, a current driver, a current sink and associated logic circuitry. The transmitter receives control and data signals at transistor-transistor logic (TTL) levels, and converts these signals to, for example, low-level serial, bi-phase Manchester coded signals for transmission of the low-level signals over the transmission line.

The receiver portion of the transceiver receives signals, for instance again low-level serial, bi-phase Manchester coded signals, and converts them into control or data signals at transistor-transistor logic (TTL) levels. The receiver comprises a voltage divider on each input, which presents a high impedance to the transmission line; a high impedance differential amplifier which blocks any common mode signal, detects the differential between received inputs, and compensates for the attenuation by the voltage dividers; and associated circuitry for establishing a threshold envelope, detecting the phase changes of the received signal, and disabling the receiver during transmission.

The tap and transceiver combination which the present invention thus provides, may conveniently be used in a bus access module which may include, in addition to the high impedance transceiver, a plurality of repeater transceivers having a low impedance characteristic with respect to associated secondary transmission lines. Each low impedance transceiver may be functionally similar to the high impedance transceiver and be operable in either a receive mode to receive a phase modulated Manchester signal from an associated secondary transmission line and to convert the signal into control and data signals at TTL logic levels; or in a transmit mode, in which it receives the control and data signals and transmits a phase modulated Manchester signal to its associated secondary transmission line. The low impedance transceivers within each access module will usually be interconnected such that only one transceiver in the module will be in a receive mode and each of the others will be in a transmit mode. The access module, therefore, operates to receive a phase-modulated Manchester signal from one transmission line and transmit corresponding phase-modulated signals to the other transmission lines coupled to the access module.

The invention will now be described further with reference to the accompanying drawings, of which:-

Figure 1 is a block diagram of a distributed transmission system in which the present invention may be employed.

Figure 2a shows the physical arrangement of the signal transmission line and connectors on a bus access module of Figure 1.

Figure 2b is a partly schematic diagram of a prior art passive tap.

Figure 2c is an oblique view of a passive tap according to the present invention.

Figures 2d and 2e shows respectively the reflections signal from the prior art tap of Figure 2b and on the tap of Figure 2c.

Figure 3 shows a square wave representation of a tri-state, low-level serial Manchester coded signal and its respective positive and negative phase currents.

Figure 4 consisting of of Figures 4a and 4b, is a schematic diagram of an embodiment of the high impedance transceiver of the present invention.

Figure 5, consisting of Figures 5a and 5b, is a schematic diagram of a modified form of the transceiver of Figure 4.

Figure 6 is a schematic diagram of a low impedance transceiver associated with each input/output port of a bus access module.

Figure 7 is a block diagram of a two port bus access module.

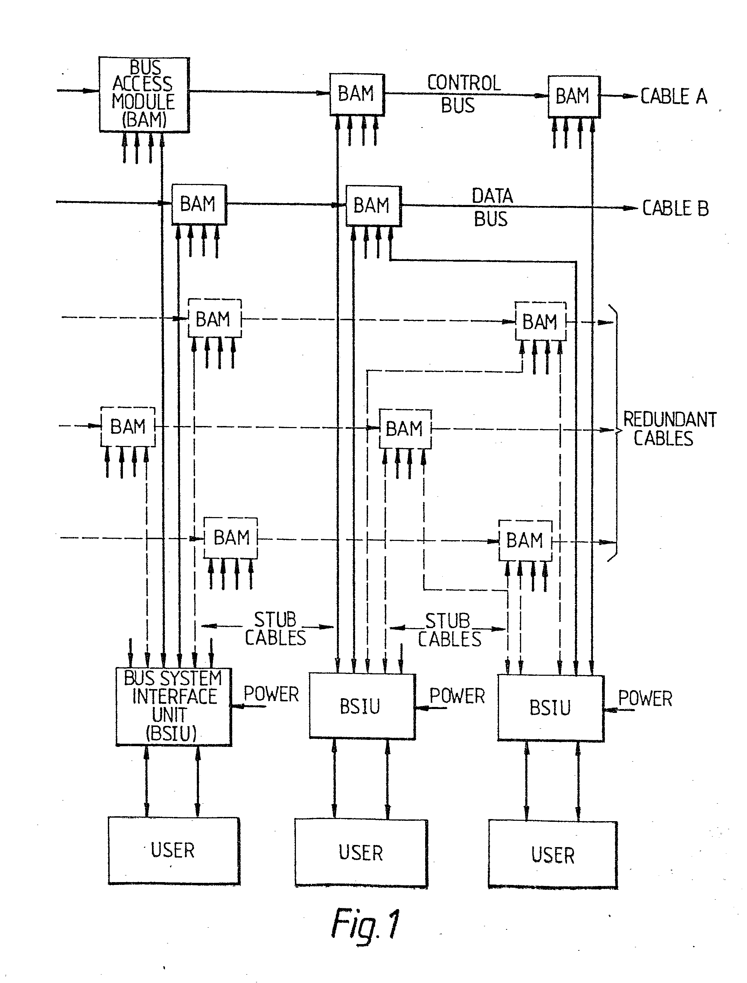

Referring now to Figure 1, the bus transmission system shown has two triaxial transmission cables, one cable handling data transmissions and one handling control transmissions. The control and data information is transmitted as a low-level serial, bi-phase Manchester coded signal at $\pm 0.6$ volt levels over the transmission lines and is accessed by the users at their associated bus access modules (BAM) coupled to the control and data transmission lines. The information is received from or transmitted to the transmission line by each user, which may be a computer or peripheral device, via the appropriate bus access modules and an associated bus system interface unit (BSIU).

The BSIUs, like the bus access modules, are of a modular design and act as the users' interfaces to the transmission system. The BSIUs control all bus communications within the system and essentially operate as input/output vectoring controls directing the flow of information and enabling any user to communicate in either a point-to-point or broadcast mode with the other users sharing the system. Each BSIU has the further capability of becoming the controlling BSIU for the system.

Not only should each bus access module electrically appear as a high impedance load to the transmission line, but it should also provide isolation from the transmission line if a failure such as an open or short circuit were to occur within any BAM, BSIU or user. The tap and transceiver design of the present invention, incorporated in each of the access modules, acts to passively isolate the transmission line from the BSIU and users via transformer coupling, a series/parallel diode combination and a voltage divider-differential amplifier combination.

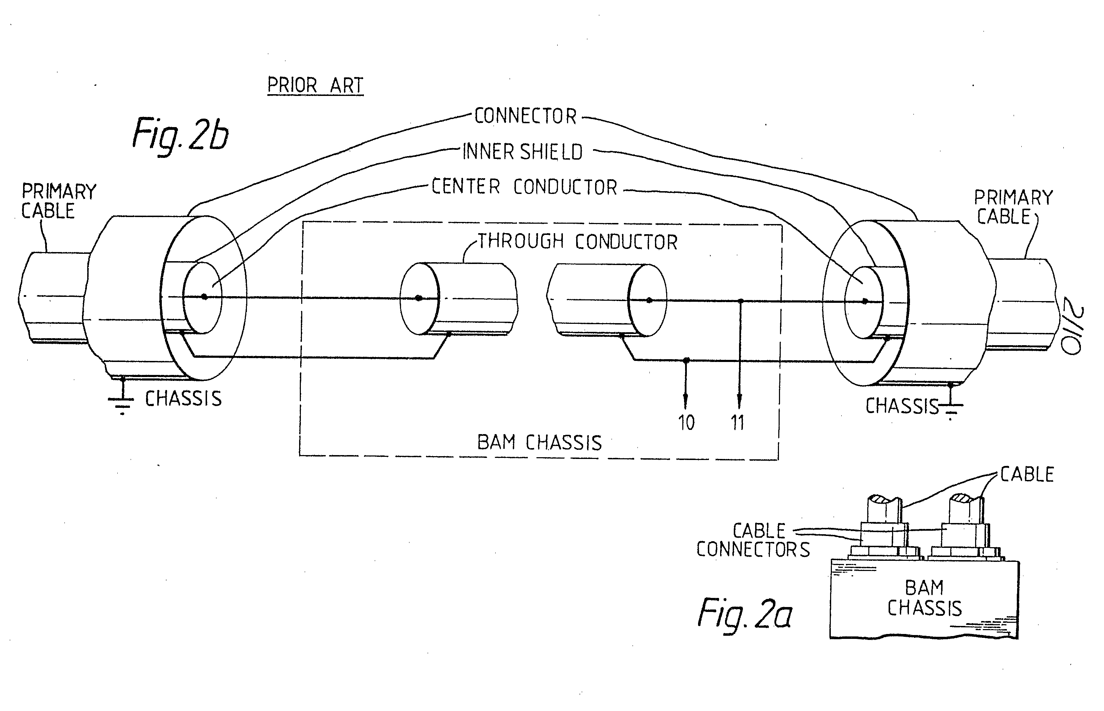

Referring to Figure 2b showing a prior art tap, an access module (BAM) is connected to the triaxial transmission line by terminating lengths of the triaxial cable at appropriate connectors to the access module (BAM) and making the through connection via a length of cable having an impedance characteristic matching the triaxial cable, and providing sections of bared conductors on the coaxial cable to which the branch conductors 10, 11 leading to the transceiver circuitry within the access module (BAM) can be soldered.

If the through conductor does not have the same impedance characteristic as the transmission line, a DC offset is produced in the transmission line's untapped voltage level, and the reflections produced by the connectors and the transceiver, coupled to the through conductor, algebraically add to this offset level, thereby either increasing or decreasing the peak amount of reflection at each tap connection.

While the reflection at a single tap is small, of the order of millivolts compared to the 0.60 volt signal level, in distributed systems having numerous taps, high data throughput rates, small signal levels and varying cable lengths, the reflections from each access module will in the worst case add, thereby producing reflection signals that can become indistinguishable from the information signals. Although reflections from successive access modules in a system may diminish due to attentuation in the transmission line, the summed effect may still be significant depending on the information signal level.

The worst case effects occur in systems where the transmission line delay between access modules is equal and equal to one half the pulse period, so that the reflections caused by each access module are in phase. The sum of the individual reflections at any one access module produces the highest peak-to-peak reflections, and if the summed reflection is offset due to through conductor mismatch, the overall reflection may increase further. It is, therefore, desirable to match the impedance of the combination of the through conductor and the transceiver circuit loading to the transmission line so that the reflection due to the transceiver circuitry coupled to the transmission line oscillates about, and on the average is equal to, the untapped impedance level of the transmission line.

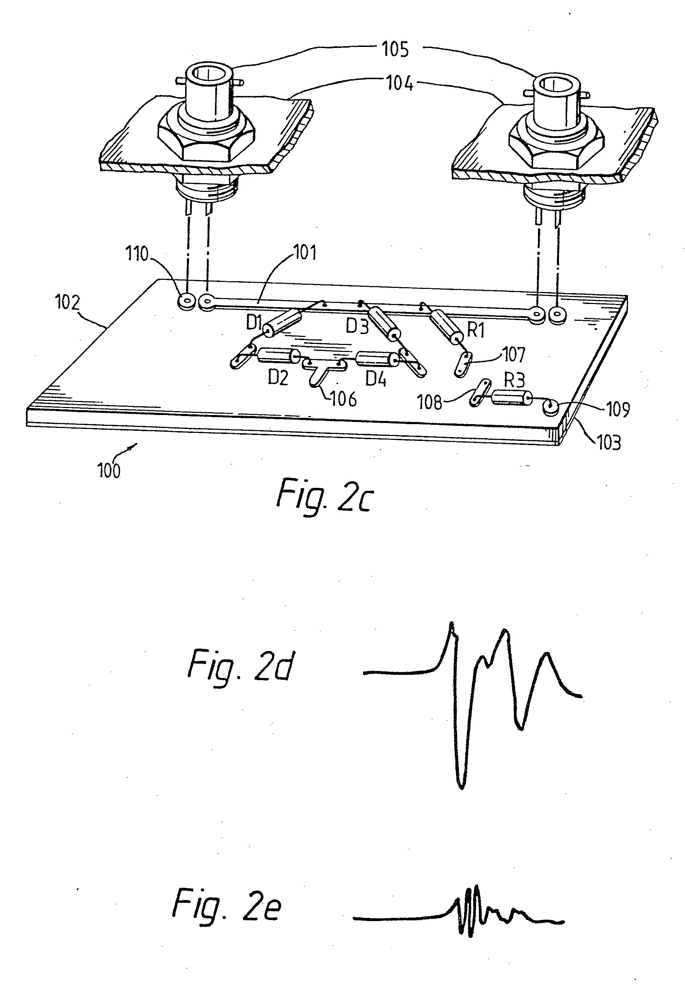

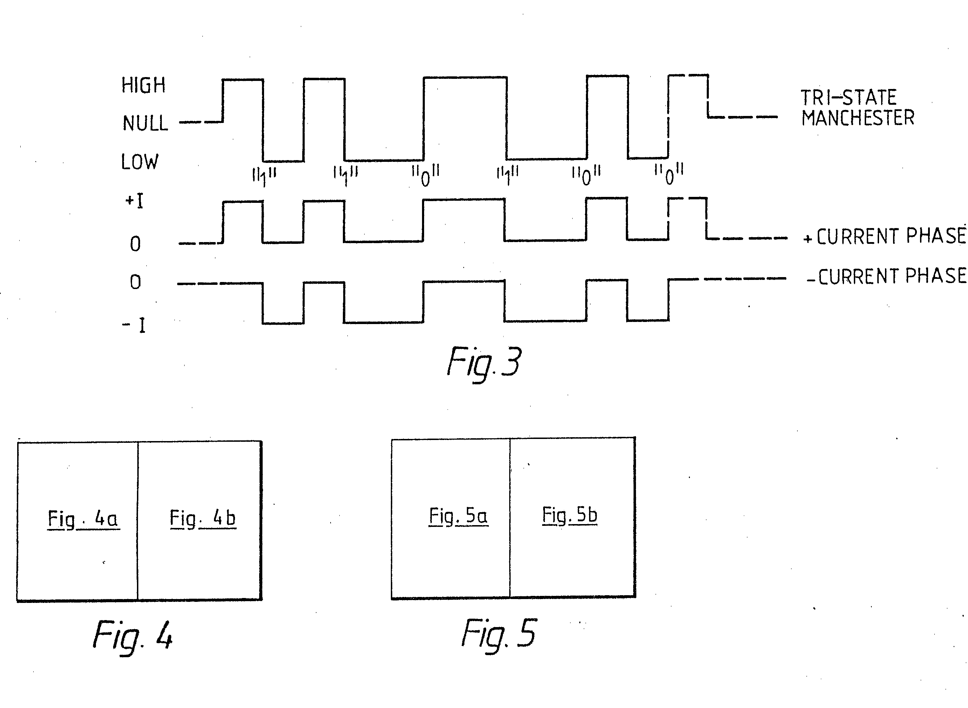

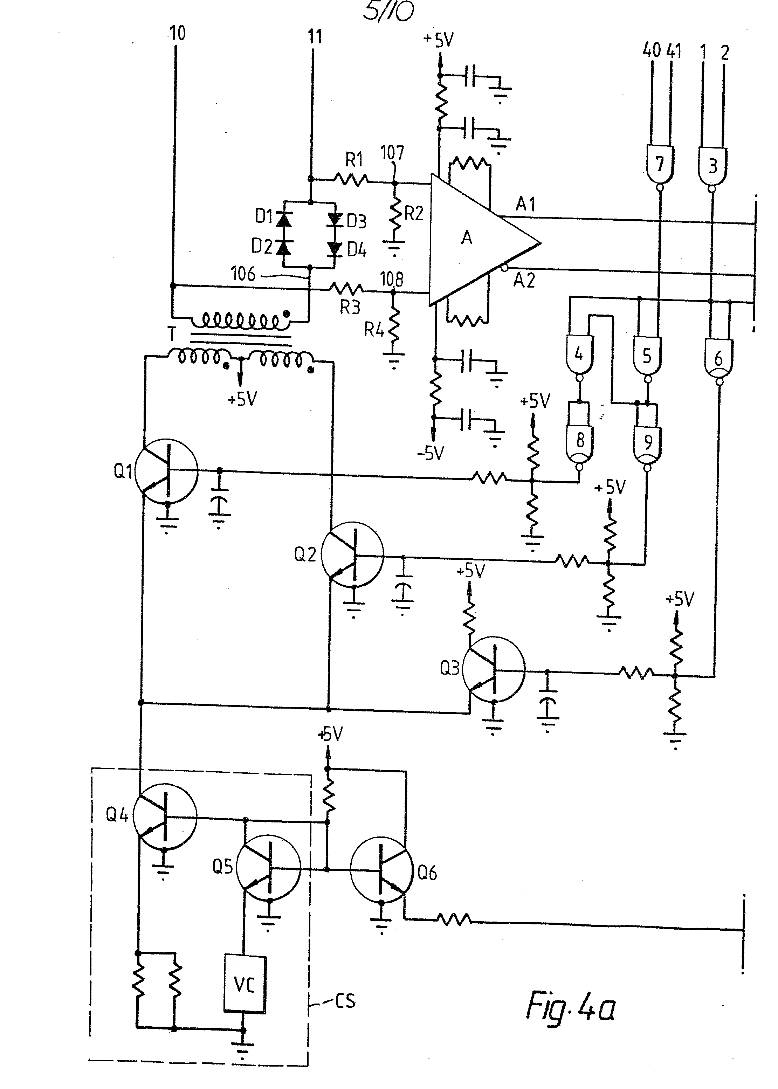

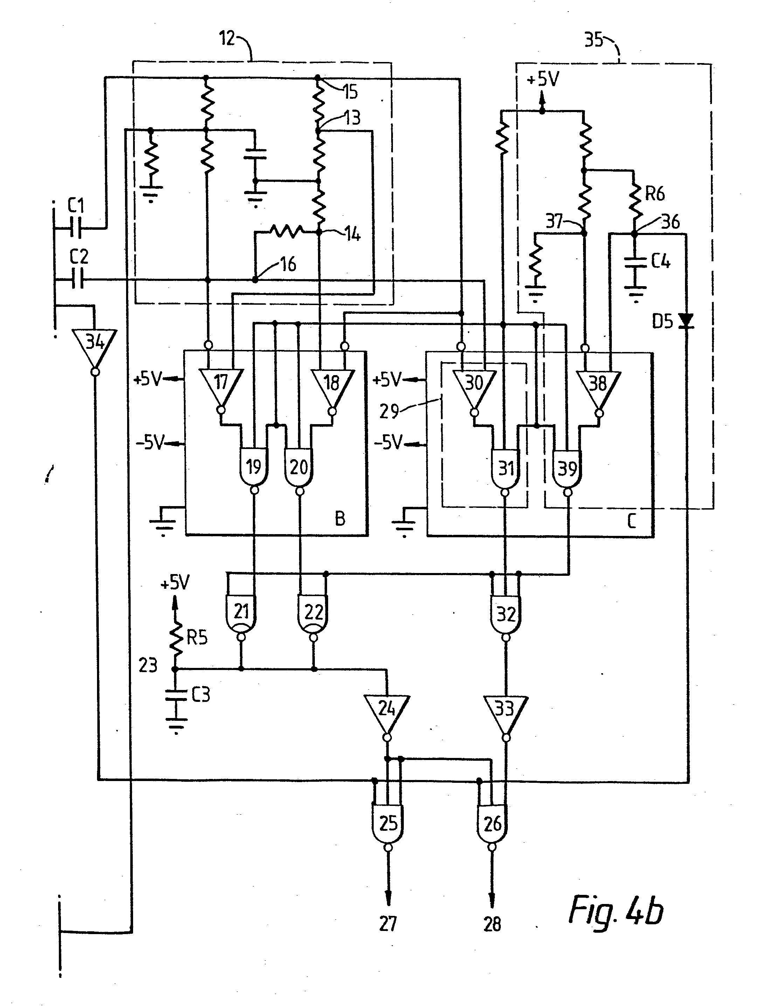

An access module using a 2-inch twisted-pair stub to the circuit of Figure 4a and a prior art tap as shown in Figure 2b and having an impedance characteristic approximating the transmission line, exhibited approximately 0.146 volts peak-to-peak of reflection, as shown in Figure 2d. In a system having sixteen such access modules, equally spaced over approximately 900 feet of transmission line the summed reflection reached approximately 0.364 volts peak-to-peak.

The reflections can be substantially reduced by the use of a tap according to the invention which has a microstrip circuit as shown in Figure 2c which includes the high impedance components necessary for coupling the transceiver to the transmission line mounted on the dielectric substrate. In such an arrangement the combined impedance characteristics of the microstrip and components, and minimum interconnect distances, can be tailored to minimize the aggregate reflection at each access module to a level which, on average, is equal to the untapped impedance level of the transmission line. An access module constructed in this manner exhibited 0.044 volts peak-to-peak of reflection, see Figure 2e drawn to the same scale as Figure 2d, and a system of sixteen modules having taps in accordance with the invention, equally spaced over approximately 900 feet of transmission line, exhibited a summed reflection of approximately 0.093 volts peak-to-peak.

Referring now to Figure 2c the microstrip 100 is fabricated using standard printed circuit technology to form an upper stripline 101 on a dielectric substrate 102. The impedance between the upper stripline 101 and the lower stripline 103 is tailored by controlling the substrate thickness and the stripline widths and thicknesses to match the impedance characteristic between the centre conductor and the inner shield of the primary transmission line cable shown in Figure 2. The impedance between the lower stripline 103 and the chassis 104 of the access module is tailored to match the impedance between the inner shield and the outer shield of the primary transmission line cable. Appropriate male connectors 105 are connected to the striplines 101 and 103, secured to the microstrip circuit 100 and the chassis 104, and insulated from each other. Female connectors attached to the triaxial cable can make electrical contact with the male connectors 105. The series/parallel diode combination D1, D2 and D3, D4 and the resistors R1 and R3 of the transceiver of Figure 4 are connected to the upper and lower striplines 101 and 103 directly and via a plated-through hole 109 respectively. A plated-through hole 110 and terminal 106, 107 and 108 respectively are provided to make the appropriate connections to the transformer T and the differential amplifier A of Figure 4. Instead of using the terminal 110, a separate through hole or the through hole 109, may be used for connection of the appropriate transformer lead.

The microstrip circuit may, alternatively, be fabricated using flexible printed circuit technology and/or thick film technology to obtain scaled down versions which can further reduce interconnect distances and the reflections produced at each tap of the transmission line.

Prior to describing the operation of the transceiver connected to the tap, it should be noted that the Manchester signal is being transmitted over the inner shield and inner conductor of the triaxial cable, neither of which is grounded. The transmitted signal may thus be at some common mode level (CML) which differs from the chassis ground potential.

-8-

The construction and operation of the transceiver design of the present invention in its transmit and receive modes will now be described with reference to Figures 3 and 4. The transceiver is capable of receiving and transmitting a tri-state Manchester coded signal (shown in Figure 3) at a 10 megabit/sec rate at logic levels defined by a differential of ± 0.6 volts. In the Manchester coding scheme a logic "1" is defined as the transition of the signal from +0.6 to -0.6 volts at the middle of the bit period. The binary information content of the signal is determined by decoding circuitry which establishes appropriate windows during which the decoding circuitry detects the direction of signal crossing at a reference level of approximately 0 volts. For example, the Manchester signal shown in Figure 3 corresponds to a binary 110100.

The transceiver of Figure 4 is made to operate in its receive mode by impressing a TTL logic high on the inputs 1 and 2 of NAND gate 3 which produces a logic low output. The low output impressed on the inputs to NAND gates 4,5 and 6 causes NAND gates 4,5, and 6 to produce logic highs, irrespective of any output of NAND gate 7. NAND gates 6, 8, 9, 20 and 21 are of the open-collector connected type, such as Texas Instruments Part No. SN54S03, to operate as current sinks but not as current sources. The high outputs of NAND gates 4 and 5 impressed on the inputs of respective NAND gates 8 and 9 produce low outputs which, impressed on the respective bias circuits to the bases of transistors Q1 and Q2, cause the transistors Q1 and Q2 to turn "off" and not conduct. At the same time as transistors Q1 and Q2 are "off", the high output of NAND gate 6 is impressed on the base of transistor Q3, which causes Q3 to turn "on" and conduct a constant current to ground through the current sink CS. The current sink CS contains transistors Q4 and Q5 and a constant voltage source VC and acts to establish the constant current flow fixed by the value of the voltage source VC connected between the emitter of transistor Q5 and ground.

With transistors Q1 "off", Q2 "off" and Q3 "on", the transceiver cannot transmit. The non-conduction of transistors Q1 and Q2 ensures that any signals impressed on the inputs of NAND gate 7 cannot induce current flow through transformer T. Consequently the transceiver can operate only in its receive mode.

With the transceiver in its receive mode of operation, the low-level Manchester coded signal of Figure 3 at the common mode level is received on conductors 10 and 11 of Figure 4. Because the data and control information signals associated with the data and control cables are transmitted at $\pm 0.6$ volts maximum, the signal level is too small to overcome the forward threshold voltage drops of the series/parallel combination of diodes D1, D2 and D3, D4 which thereby isolates the transmitter circuitry during the receive mode and minimizes reflections. The received differential signal, however, is detected by the matched voltage dividers R1, R2 and R3, R4 and attenuated. The voltage dividers are matched to attenuate any common mode signals equally and maintain the condition of common mode rejection. Attenuation is also necessary to stay within the allowable common mode voltage ratings of the amplifier A, a video amplifier, and allows R1 and R3 to be made large, thus minimizing loading on the transmission line.

The attenuated signal is amplified by the video amplifier A, such as a Texas Instruments Part No. SN52733, which has a gain sufficient to compensate for the attenuation by the voltage dividers, and which reproduces the signals as outputs A1 and A2. The outputs A1 and A2 are indicative of the differential signal received and contain almost none of the common mode signal which may exist on the bus transmission system.

The outputs A1 and A2 are impressed on capacitors C1 and C2. The capacitors C1 and C2 isolate the video amplifier DC output level from the threshold envelope detector 12 and compensate for high frequency roll-off and the complementary error response function of the transmission line. The differential signal is then impressed on the receiver threshold envelope detector 12.

The threshold envelope detector 12 in conjunction with the fixed reference voltage established by constant voltage source VC and transistor Q6, which is "on" and conducting during both the transmit and receive mode, establishes equal threshold voltage differentials between the junctions 13 to 15 and 14 to 16. These threshold voltage differentials act to suppress noise

-10-

and reflections. The thresholds must be exceeded by the signal before it is adjusted to the TTL logic levels compatible with the subsequent logic gates.

In the steady state, none of the received signals exceeds the threshold levels, and the differential voltage applied to operational amplifiers 17 and 18 of line receiver B, such as a Texas Instruments Part No. SN 55107, via respective junctions 13 and 16, and 14 and 15, back-biases the amplifiers 17 and 18, causing them to produce logic highs. The respective logic highs in conjunction with the hardwired logic highs to NAND gates 19 and 20 cause NAND gates 19 and 20 to produce logic lows. The logic lows are then impressed on respective NAND gates 21 and 22 which produce logic highs, irrespective of the input from line receiver C, which is generally identical to receiver B. The logic highs are then impressed on junction 23 and inverter 24 causing inverter 24 to produce a logic low. The logic low of inverter 24 is then impressed on NAND gates 25 and 26 causing them to produce logic highs, irrespective of their other inputs. The logic high from NAND gate 25 appearing on output 27 is defined by the system to indicate that the threshold envelope detector 12 is not receiving and the system, therefore, disregards the output of NAND gate 26 appearing on output 28.

When a signal is received, and looking to the conditions that exist during reception of the peak level of the + phase when A1 is more positive than A2, junction 15 goes more positive, and junction 13 follows junction 16. When junction 13 exceeds junction 16, it forward biases amplifier 17, causing amplifier 17 to produce a logic low, which low causes NAND gate 19 to produce a logic high. The logic high from NAND gate 19 in conjunction with the input from line receiver C, which input will be a logic high during the receive mode, causes NAND gate 21 to sink current. While junction 15 is going more positive, junction 14 goes more negative which increases the reverse bias on amplifier 18. Amplifier 18 therefore continues to produce a logic high, which in conjunction with the hardwired high to NAND gate 20 causes NAND gate 20 to produce a logic low and the logic low impressed on NAND gate 22 causes NAND gate 22 not to sink current.

Junction 23 in response to the above, therefore, has a current sink available via NAND gate 21 which acts as a current sink to the charge stored on capacitor C3 during the steady state. The discharge time of C3 is substantially faster than its charge time, the charge time being dependent on R5 and the pull up within NAND gate 22. The discharging of C3 causes the input to inverter 24 to switch to a logic low and inverter 24 responsively produces a logic high. During the receive mode, as amplifiers 17 and 18 are being biased on and off, the junction 23 will remain at a logic low so long as signals exceeding the threshold margin of detector 12 are received. The transmission rate can affect the logic state at junction 23, but at the 10 megabit/sec rate the junction will remain at a logic low.

While the threshold envelope detector 12 is responding to the differential signal being received from A1 and A2, the zero crossing detector 29, comprising the differential amplifier 30 and NAND gate 31 contained in line receiver C, operates to detect the direction of the polarity changes of the received signals. As a precondition of the validity of the operation of zero crossing detector 29 during the receive mode, the transmission system requires that the first signal of a reception begin with a logic 1. Upon reception of a signal and assuming that junction 15 is more positive than junction 16, amplifier 30 would be forward biased causing it to produce a logic low. The logic low in conjunction with the hardwired logic highs to NAND gate 31 would cause NAND gate 31 to produce a logic high. When junction 15 is more negative than junction 16, amplifier 30 will produce a logic low, which low causes NAND gate 31 to produce a logic low. The output of NAND gate 32 is then inverted by inverter 33 to a logic low. The logic low from inverter 33 causes NAND gate 26 to produce a logic high on output 28, irrespective of any of its other inputs. A logic high from NAND gate 31 on the other hand, causes a logic low on output 28.

The zero crossing detector will operate whenever a signal exceeds the internal threshold differential of amplifier 30. It is for this reason that the subsequent decoding circuitry coupled to outputs 27 and 28 looks for a logic low on output 27 before it responds to any signal appearing on output 28, since this condition indicates that the transceiver is in its receive mode of operation and that valid information is being received from the

-12-

transmission line. It will be recalled that the system decoding circuitry will also not respond to the output 28 until the first binary "1" is received.

During the receive mode, the logic low from NAND gate 3 is also impressed on inverter 34 causing it to produce a logic high. The logic high from inverter 34 is then impressed on NAND gates 25 and 26 and lockout timer 35. Impressing the logic high from inverter 34 on timer 35 back biases diode D5. Capacitor C4 consequently charges to a positive level via resistor R6 such that a differential voltage exists between junctions 36 and 27, which differential voltage forward biases operational amplifier 38, contained in line receiver C, causing amplifier 38 to produce a logic low. The logic low of amplifier 38 in conjunction with the hardwired high inputs to NAND gate 39 causes NAND gate 39 to produce a logic high, which logic high is impressed on NAND gates 21, 22 and 32. The operation of NAND gates 21 and 22, however, are not affected by the logic high from NAND gate 39, since receiver B responding to detector 12 controls the other inputs to NAND gates 21 and 22. The operation of NAND gate 32 is also not affected by the logic high from NAND gate 39, since the output of NAND gate 32 will be dependent on the input from the zero crossing detector 29.

Should either of inputs 1 or 2 switch to a logic low, which causes the transceiver to operate in its transmit mode, NAND 3 will produce a logic high causing inverter 34 to produce a logic low, which low forward biases diode D5 and causes capacitor C4 to discharge rapidly. Amplifier 38 is then reverse biased, causing lockout timer 35 to produce a logic low. This logic low then controls the operation of NAND gates 21, 22, and 32 causing inverters 24 and 33 to produce logic lows, which lows cause NAND gates 25 and 26 to produce logic highs on outputs 27 and 28. The logic highs on outputs 27 and 28 are interpreted again by the subsequent system decoding circuitry as indicating that the transceiver is not in its receive mode of operation. The lockout condition will also continue, even after inputs 1 and 2 return to logic highs, until C4 charges and junction 36 reaches a voltage level exceeding the level at junction 37. This lockout prevents the last portion of a transmit signal from being interpreted as a start of a receive signal.

-13-

The operation of the transceiver will now be described in its transmit mode of operation with reference to Figures 3 and 4. This mode is established by impressing a logic low on either of inputs 1 or 2 which, as previously described, causes NAND gates 25 and 26 to produce simultaneous logic highs which indicate to the subsequent decoding circuitry that the receiver is not enabled and that any output from NAND gate 26 is to be disregarded. A logic low on either input 1 or 2 causes NAND gate 3 to produce a logic high which high is then impressed on NAND gates 4, 5 and 6. NAND gate 6 then produces a logic low, which low causes transistor Q3 to turn off and not conduct during the transmit mode. Since one of the transistors Q1, Q2 or Q3 is always "on", the current drawn by the transceiver remains relatively constant and, therefore, small amounts of power line filtering can be used.

With the output of NAND gate 3 at a logic high, the output of NAND gate 7 determines what signals are being transmitted. During the transmit mode, TTL logic signals are impressed on only one or the other of the inputs 40 or 41 of NAND gate 7, while the other input is held at a logic high. Assuming a logic high is impressed on input 40 with 41 held high, NAND gate 7 produces a logic low which low causes NAND gate 5 to produce a logic high which high is then impressed on NAND gates 9 and 4. NAND gate 9 functionally acting as an inverter, inverts the logic high to produce a logic low which causes transistor Q2 to turn "off" and not conduct. NAND gate 4, however, responds to the logic high from NAND gate 5 and produces a logic low which is inverted by NAND gate 8 functioning as an inverter to a logic high. The logic high from NAND gate 8 then causes transistor Q1 to turn "on" and conduct.

With transistor Q1 "on", current will flow through half of the secondary winding of transformer T, transistor Q1 and the current sink CS to ground. The current flow through the secondary winding of transformer T induces current to flow through the diodes D1 and D2, coupled to the primary of transformer T, and due to the impedance characteristics of the transmission line coupled to conductors 10 and 11, this current flow produces the positive half of a bi-phase voltage signal of approximately +0.6 volts peak, which corresponds to the logic high from input 40. As the logic state of the information on input 40 changes from a logic high to a logic low, transistors Q1 and Q2 will respectively turn "off" and "on" and the induced current will now flow through diodes D3 and D4, which will produce the negative half of a bi-phase voltage signal of approximately 0.6 volts peak.

The data received on inputs 40 and 41 at high TTL logic levels, are reproduced as the composite tri-state, low-level serial Manchester coded data of Figure 3 on the transmission line. The receiver circuitry of the transceiver naturally responds to the transmitted signal, since its inputs are directly coupled to the primary windings of transformer T. The outputs 27 and 28, however, are held at logic highs during and for a period subsequent to the transmit mode by inverter 34 and lockout timer 35 as previously described, and the subsequent decoding circuitry accordingly interprets the outputs.

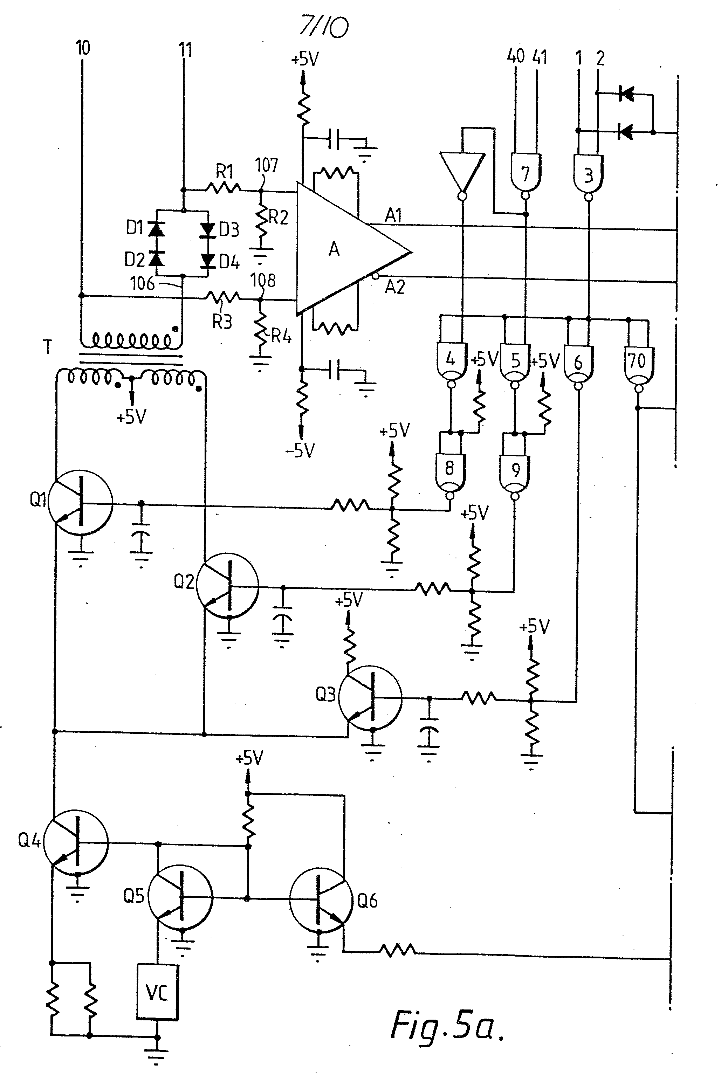

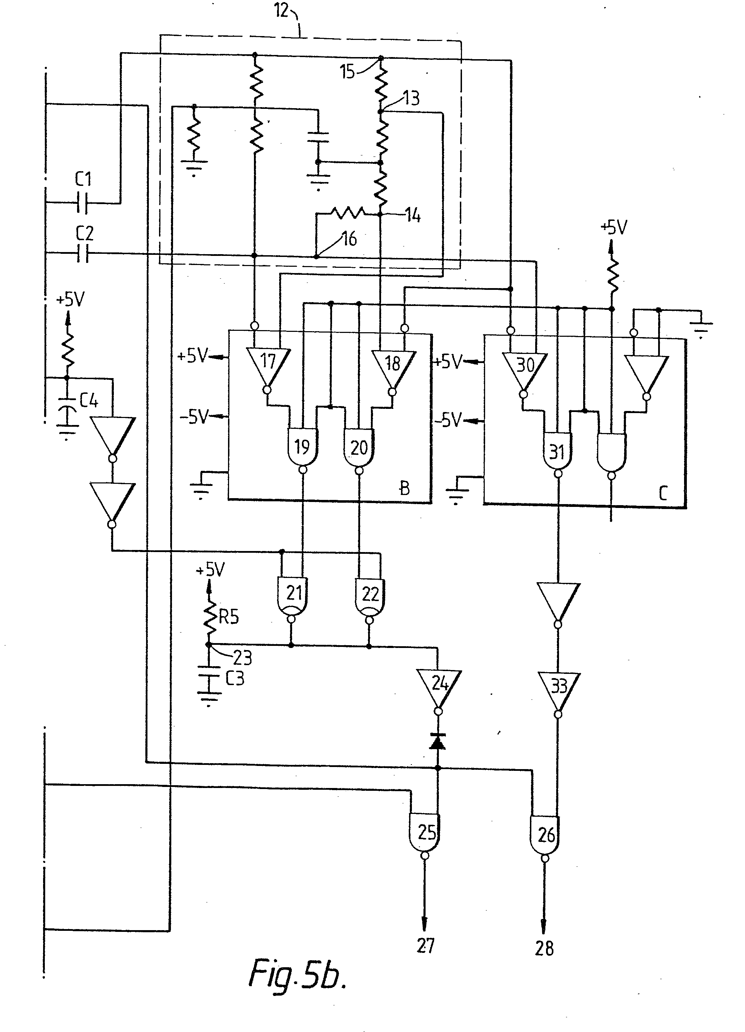

The transceiver circuit shown in Figure 5 operates in essentially the same manner as that of Figure 4, the most significant difference being that the lock-out circuit with capacitor C4 is now directly controlled by the output of NAND gate 3 via a further current sink type NAND gate 70. The changes from Figure 4 result in a somewhat improved lock-out performance.

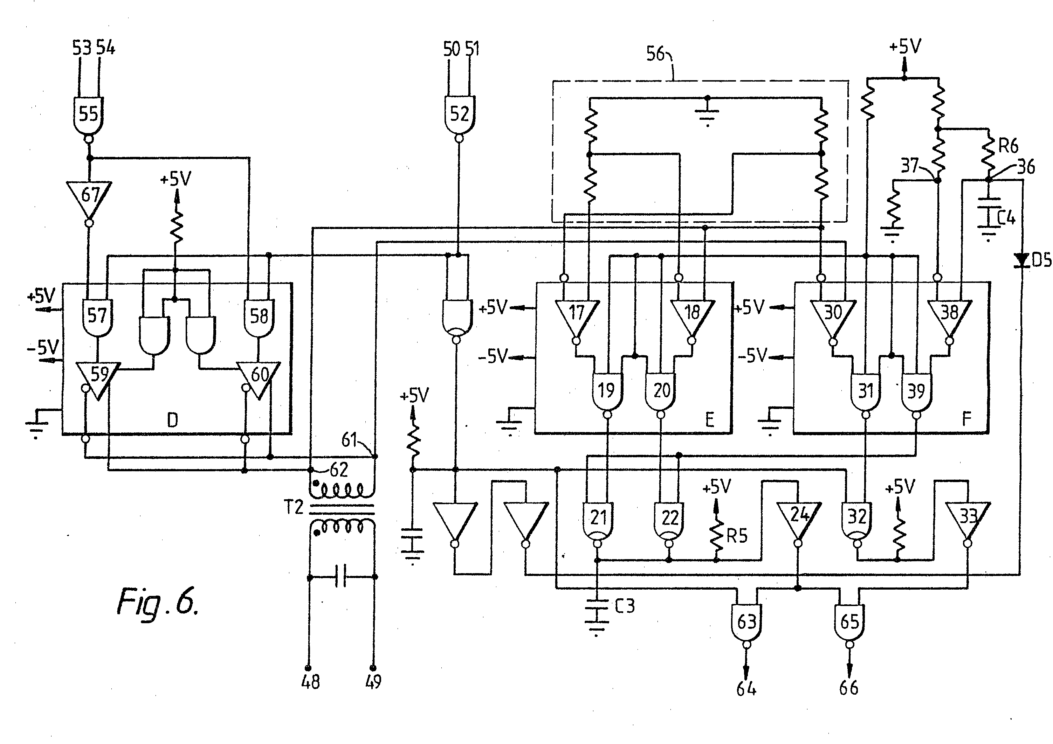

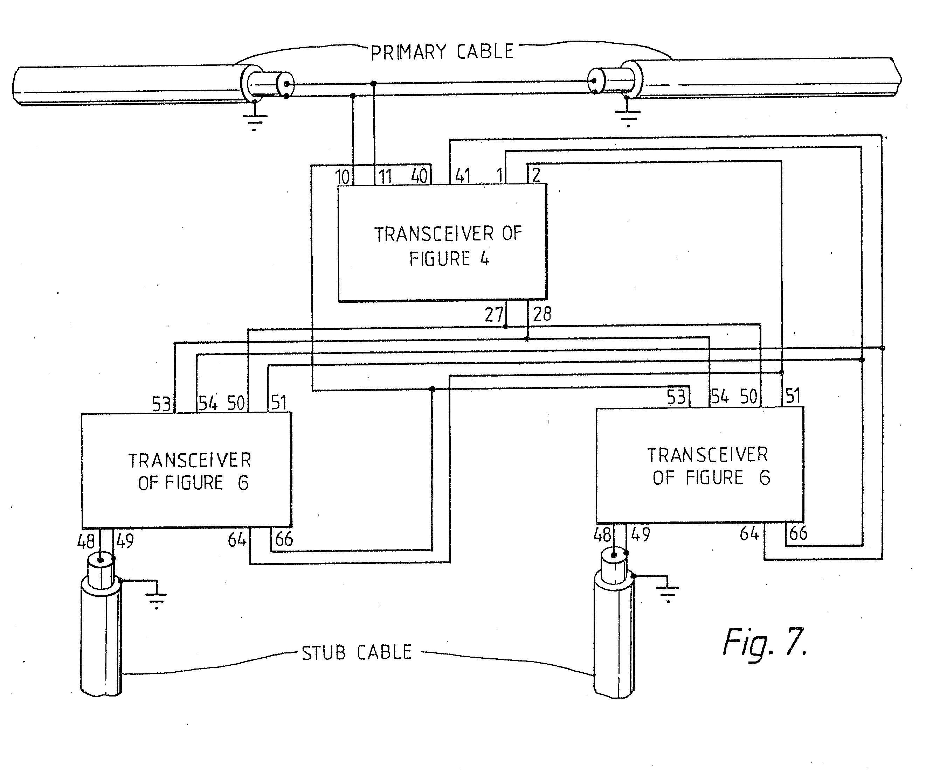

A bus access module may also contain a compatible and similarly constructed low impedance transceiver. Referring to Figure 6 a low impedance transceiver design functionally similar to the transceiver of Figure 4 is shown. The transceiver is used for making the point-to-point connections between the BSIUs and the access modules of Figure 1. The transceiver is reproduced in each BSIU and in each access module at each stub cable input/output port. A two port access module with the appropriate transceiver interconnections is shown in Figure 7, but if a similarly configured access modules requires more ports, the input NAND gates, such as 3, 7, 52 and 55, would need to have an appropriate increase in their number of inputs.

As mentioned before, the low impedance transceiver functionally operates in essentially the same manner as the transceiver of Figure 4 and, like the transceiver of Figure 4, is used in a BAM as a repeater of the binary information being transmitted over the system, whether it be in the point-to-point or in the broadcast mode and whether or not it is transmitted over the primary transmission line via the high impedance transceiver. The transceiver of Figure 6 is operable in either a transmit or receive mode to transmit and receive the tri-state Manchester signals of Figure 3 via its associated stub cable or receive and transmit the two state, two wire, TTL level control and data signals to the other transceivers interconnected with itself in the BAM. The transceiver design differs from that of Figure 4 primarily in that the dual line driver D, Texas Instruments Part No. SN55110, is used as the current driver to drive transformer T2, when the transceiver is in its transmit mode; and in combination with the threshold envelope detector 56 to establish similar differential margins as those set by threshold envelope detector 12, when the transceiver is in its receive mode.

Referring to Figures 6 and 7, the transceiver operates in its transmit mode when a logic low control signal, which indicates that the threshold envelope detector 56 is receiving valid information from one of the associated transceivers is impressed on either of the inputs 50 or 51 of NAND gate 52 while the other input is at a logic high. The two state TTL data signals, corresponding to the received information being transmitted by the associated transceiver, are simultaneously impressed on one of the inputs 53 or 54 of NAND gate 55, while the other input from the other associated transceiver is at a logic high. The inputs to NAND gates 57 and 58 of driver F will, therefore, responsively switch with the data signals with one or the other of the inputs always at a logic low depending on the output of NAND gate 55 and inverter 67. The differential amplifiers 59 and 60 responding to the alternating outputs of NAND gates 57 and 58 will consequently alternate as either a current sink or a current source, thus switching the direction of current flow through transformer T2 and the threshold envelope detector 56, thereby inducing the positive and negative bi-phase signals of Figure 3 on the stub cable connected to the primary winding of transformer T2 via conductors 48 and 49. The identical low impedance transceiver within the BSIU coupled to the other end of the stub cable will receive the Manchester signal being transmitted and convert the received signal to two-state control and data signals at TTL levels, indicating that valid information is being received and what the information is. The BSIU then couples this information to its user for decoding or further processing. The receive mode for the transceiver of Figure 6 is established by impressing logic high control signals from the associated transceivers on inputs 50 and 51, thereby causing NAND gate 52 to produce a logic low, which low impressed on NAND gates 57 and 58 of line driver D causes the true output of each of the differential amplifiers 59 and 60 to source current and the complement output of the other amplifier to sink the current, thereby causing the potentials on junctions 61 and 62, due to the matched loads on the junctions to ground via the threshold detector 56, to be the same in the steady state condition. When a Manchester signal is received from the stub cable on conductors 48 and 49, the potentials on junctions 61 and 62 respond to the signal level changes causing the differential amplifiers 17 and 18 of line receiver E, identical to receiver F, B and C, to responsively be biased on and off and switch their outputs between logic highs and lows in the same manner as the transceiver of Figure 4 to produce an output on NAND gate 63 indicative of whether or not the transceiver is receiving valid signals. A logic low on output 64 of NAND gate 63 is again defined as indicating that valid information is being received.

The changing polarities on junctions 61 and 62 similarly cause the zero crossing detector comprising amplifier 30 and NAND gate 31 of receiver F to responsively switch with the polarity changes and produce corresponding two state data signals at TTL levels on output 66 of NAND gate 65.

The lockout timing circuitry of the transceiver of Figure 6 functions in essentially the same manner as that for the transceiver of Figure 4 but the associated output from through line receiver F is connected in a slightly different manner in that the charge and discharge times of capacitors C4 and C5 are adjusted so that together they prevent the last portion of a transmitted bi-phase signal from being interpreted as the start of a receive signal.

A bus access module comprised of the microstrip circuit of Figure 2c and the transceivers of Figures 4 and 6 and interconnected in the manner of Figure 7, therefore, enables the transmission of signals to associated stub cables or from one stub cable to each of the other associated stub cables and the primary transmission line. Such an access module further contributes to improve the performance of distributed transmission systems of the type shown in Figure 1 or of other distributed system architectures.

-18-

CLAIMS

1.      A passive tap for a signal transmission line, comprising a primary signal path arranged to be connected in series with the transmission line and having impedance characteristics substantially matching those of the transmission line, and a secondary signal path connected in parallel with, and presenting a high impedance to, the primary path, characterised in that the primary path comprises two strip conductors (101, 103) carried on and separated by an insulating substrate (102) which also carries connectors (105) included in the primary path for said series connection and at least some high impedance components ($R_1$, $R_3$) of the secondary path.

2.      A passive tap according to claim 1 wherein the secondary path includes a network ($D_1$, $D_2$, $D_3$, $D_4$) arranged to conduct when the applied signal exceeds a predetermined magnitude during signal transmission to the primary path (101, 103, 105), and to be non-conducting when the signal level is below that threshold during signal reception from the primary path (101, 103, 105).

3.      A passive tap as claimed in claim 2 wherein the network comprises two antiparallel branches of two or more series connected diodes ($D_1$, $D_2$, and $D_3$, $D_4$) each, located on said insulating substrate (102).

4.      A passive tap as claimed in claim 2 or claim 3, in which the network ($D_1$, $D_2$, $D_3$, $D_4$) is connected in series with the secondary winding of a transformer to form the output circuit of a transmitter portion of a signal transceiver, and in which an input circuit of the transceiver comprises two matched high resistance voltage dividers ($R_1$, $R_2$ and $R_3$, $R_4$) connected in parallel with the output circuit.

5.      A passive tap as claimed in claim 4 wherein the signal transceiver coupled to the secondary current path is selectively operable in a receive mode or a transmit mode for receiving or transmitting serial phase-modulated signals and comprises a threshold detector (12) to detect when a received signal exceeds a preselected threshold and to produce a control signal in response thereto, a signal detector (27) coupled to the threshold detector (12) and arranged to produce a data signal in response to predetermined polarity changes in the received signal, and a lockout circuit (35) which holds the data and control signals at a preset level during operation of the transceiver in the transmit mode to render the receiver circuitry unresponsive to the transmitted signals.

//IO

Fig. 1

PRIOR ART

*Fig.2b*

CONNECTOR

INNER SHIELD

CENTER CONDUCTOR

PRIMARY CABLE

THROUGH CONDUCTOR

PRIMARY CABLE

2/0

CHASSIS

10  11

CHASSIS

BAM CHASSIS

CABLE

CABLE CONNECTORS

BAM CHASSIS

*Fig.2a*

CC16637

Fig. 2c

Fig. 2d

Fig. 2e

HIGH
NULL ————
LOW
        "1"     "1"     "0"     "1"     "0"     "0"

TRI-STATE
MANCHESTER

+I
0 ————

+CURRENT PHASE

0 ————

-CURRENT PHASE

-I

*Fig. 3*

4/10

| Fig. 4a | Fig. 4b |

*Fig. 4*

| Fig. 5a | Fig. 5b |

*Fig. 5*

CC16637

5/10

Fig. 4a

Fig. 4b

0016637

*Fig.5a.*

8/10

Fig.5b.

Fig.6.

PRIMARY CABLE

TRANSCEIVER OF
FIGURE 4

10  11  40   41  1  2

27  28

53   54 50   51

TRANSCEIVER
OF FIGURE 6

48  49   64  66

53   54 50   51

TRANSCEIVER
OF FIGURE 6

48  49   64  66

STUB CABLE

*Fig. 7.*

00 16637

European Patent
Office

EUROPEAN SEARCH REPORT

Application number

EP 80300842.4

| Category | Citation of document with indication, where appropriate, of relevant passages | Relevant to claim |
|---|---|---|
| X | FR - A - 1 167 557 (GENERALE AERO-NAUTIQUE)<br><br>+ Fig. 1,4 + | 1 |
| A | DE - A1 - 2 419 173 (ROBERT BOSCH)<br><br>+ Claim 1, lines 1-9 + | 1 |
| | DE - B1 - 2 603 607 (SIEMENS AG.)<br><br>+ Fig. 1; claims 1-3 + | 1,2 |
| | US - A - 3 899 637 (WILLARD)<br><br>+ Fig. 1,2 + | 4,5 |

**DOCUMENTS CONSIDERED TO BE RELEVANT**

**CLASSIFICATION OF THE APPLICATION (Int. Cl. ³)**

G 06 F 3/04
H 04 L 5/14
H 01 P 5/00

**TECHNICAL FIELDS SEARCHED (Int.Cl. ³)**

G 01 R 1/00
G 01 R 21/00
G 01 R 27/00
G 06 F 3/00
G 06 F 9/00
G 06 F 13/00
H 01 P 3/00
H 01 P 5/00
H 04 L 5/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | |
|---|---|---|
| X | The present search report has been drawn up for all claims | |

| Place of search | Date of completion of the search | Examiner |
|---|---|---|
| VIENNA | 13-06-1980 | DRÖSCHER |

EPO Form 1503.1  06.78